# EUROPÄISCHE PATENTSCHRIFT

(11) **EP 2 168 809 B1**
(45) Veröffentlichungstag und Bekanntmachung des Hinweises auf die Patenterteilung: **02.11.2011**
(21) Anmeldenummer: 08016964.2
(22) Anmeldetag: 26.09.2008
(51) Int. Cl.: B60P 7/08

(54) **Haltevorrichtung zur Befestigung von Gepäckstangen**
Holding device for securing packing rods
Dispositif de fixation destiné à la fixation de tronçons de bagages

(43) Veröffentlichungstag der Anmeldung: 31.03.2010
(73) Patentinhaber: YMOS GmbH, 55743 Idar-Oberstein (DE)
(72) Erfinder: Kley, Frank, 55767 Gimbweiler (DE)
(74) Vertreter: Ostermann, Thomas

(56) Entgegenhaltungen:
- EP-A- 1 932 719
- DE-U1-202006 010 599
- US-A- 5 236 153

## Beschreibung

Die Erfindung betrifft eine Haltevorrichtung zur Befestigung von Gepäckstangen, Netzen, Taschen oder dergleichen an in einem Gepäckraum von Fahrzeugen montierten Halteschienen mit einem Haltekörper nach dem Oberbegriff des Patentanspruchs 1.

Aus der EP 1 932 719 A1 ist eine Haltevorrichtung zur Befestigung von Gepäckstangen oder dergleichen in Kraftfahrzeugen bekannt, die einen Haltekörper vorsieht, der zum einen in einer Verschiebestellung verschiebbar entlang einer Halteschiene und zum anderen in einer Klemmstellung an der Halteschiene fixierbar ist. Der Haltekörper weist Haltemittel, wie beispielsweise Haltearme auf, an die beispielsweise ein Gurt befestigt werden kann. Zum Verbringen des Haltekörpers in die Klemmstellung bzw. in die Verschiebestellung ist als Betätigungselement ein um eine senkrecht zur Halteschiene verlaufende Drehachse schwenkbares Drehelement vorgesehen, das über Stellmittel in der Klemmstellung zum einen auf ein schwenkbar gelagertes erstes Klemmelement einwirkt, so dass dieses in Querrichtung zu der Drehachse auf die Halteschiene drückt, und zum anderen auf ein zweites Klemmelement einwirkt, das in Axialrichtung des Drehelementes auf die Halteschiene drückt. Nachteilig an der bekannten Haltevorrichtung ist, dass durch das axiale Anpressen des zweiten Klemmelementes auf eine Vorderseite der Halteschiene nach Einnahme des Haltekörpers einer anderen Verschiebestellung Schlieren sichtbar sind, die das optische Erscheinungsbild der Halteschiene beeinträchtigen.

Aufgabe der vorliegenden Erfindung ist es daher, eine Haltevorrichtung zur Befestigung von Gepäckstangen oder dergleichen derart weiterzubilden, dass die Handhabung bzw. Bedienungsfreundlichkeit eines entlang einer Halteschiene verschiebbar gelagerten Haltekörpers verbessert wird, ohne dass sichtbare Spuren an der Halteschiene verbleiben.

Zur Lösung dieser Aufgabe weist die Erfindung die Merkmale des Patentanspruch 1 auf.

Der besondere Vorteil der Erfindung besteht darin, dass durch bedienungsfreundliches Verdrehen eines beabstandet zu einer Vorderseite der Halteschiene angeordneten Drehelementes ein Haltekörper der Haltevorrichtung einfach zwischen einer Klemm- und einer Verschiebestellung verstellt werden kann. Das Drehelement wirkt über Stellmittel auf ein quer zu einer Drehachse des Drehelementes angeordnetes linear bewegliches Klemmelement, das in einer Innenposition desselben mit einem abragenden Nocken gegen die Halteschiene presst, wobei eine quer zur Drehachse und quer zur Halteschiene wirkende Klemmkraft erzeugt wird. Dadurch, dass keine Klemmkraft in Axialrichtung des Drehelementes erfolgt, kann das Verbleiben von sichtbaren Spuren auf einer Vorderseite der Halteschiene vermieden werden. In einer Verschiebestellung des Haltekörpers befindet sich das Klemmelement in einer Außenposition, in der der Abstand des Klemmelementes von einer Längsmittelebene der Halteschiene, durch die die Drehachse des Drehelementes verläuft, größer ist als der Abstand zu derselben in der Innenposition. Ein gleitendes Verschieben des Haltekörpers entlang der Halteschiene ist in dieser Position möglich.

Nach einer Weiterbildung der Erfindung ist der Nocken des Klemmelementes in Richtung einer Längsmittelebene der Halteschiene verjüngend ausgebildet, so dass sich der vorzugsweise aus einem Metallwerkstoff (Stahlmaterial) bestehende Nocken nach und nach mit seinem spitz zulaufenden Eingreifende auf die Rückseite der Halteschiene drücken kann. Im Zusammenwirken mit den Stellmitteln wird somit eine stabile Anpresskraft erzeugt, die den Haltekörper in der Klemmstellung verharren lässt.

Nach einer bevorzugten Ausführungsform der Erfindung ist der Nocken Bestandteil eines winkelförmigen Einsetzteiles, das formschlüssig in dem Klemmelement integriert ist. Das Klemmelement ist als ein Rasthaken ausgebildet, der mit einem gegenüberliegenden Anlagehaken eines auf der Vorderseite der Halteschiene aufliegenden Schiebeelementes zusammenwirkt, so dass der Haltekörper in die Verschiebestellung oder die Klemmstellung verbracht werden kann.

Nach einer Weiterbildung der Erfindung weist das Klemmelement einen Rasthaken auf, der einstückig mit einem Querschieber verbunden ist, der quer zu der Drehachse bzw. zur Halteschiene verschiebbar zu einem auf der Halteschiene unmittelbar aufliegenden Schiebeelement gelagert ist. Als Stellmittel zum Verbringen des Haltekörpers in die Verschiebestellung bzw. Klemmstellung ist ein Exzenter vorgesehen, der in einer Ausnehmung des Querschiebers gelagert ist. Vorzugsweise ist der Exzenter einstückig mit dem Drehelement verbunden. Die Exzenterflächen des Exzenters bzw. ein Rand der Ausnehmung des Querschiebers sind derart geformt, dass durch Drehung des Drehelementes um einen vorgegebenen Winkel, vorzugsweise 90°, der Haltekörper in eine definierte Verschiebestellung und definierte Klemmstellung verbringbar ist. Vorzugsweise ist das Drehelement lediglich um 90° in Links- bzw. Rechtsrichtung verdrehbar, so dass die gleiche Haltevorrichtung für sowohl auf einer linken, als auch auf einer rechten Kofferraumseite angeordnete Halteschienen verwendbar ist.

Nach einer Weiterbildung der Erfindung weist das auf einer Vorderseite der Halteschiene angeordnete Schiebeelement gegenüberliegende Gleitkufen auf, mittels derer das Schiebeelement auf der Vorderseite der Halteschiene aufliegt. Diese Gleitkufen sind vorzugsweise federnd ausgebildet, so dass ein unerwünschtes Vibrieren des Haltekörpers in der Verschiebestellung vermieden wird.

Nach einer Weiterbildung der Erfindung weist das Schiebeelement auf einer dem Anlagehaken gegenüberliegenden Seite lediglich eine ebene Führungsfläche auf, die mit einer Durchbrechung versehen ist, so dass das Klemmelement an das Schiebeelement unter gegenüberliegender Positionierung des Klemmelementes zu dem Anlagehaken ansetzbar ist. Die Ausnehmung des Querschiebers dient nicht nur zur Aufnahme des Exzenters, sondern auch zum Durchstecken eines Befestigungselementes in Richtung des Schiebeelementes, so dass das Drehelement drehbar an dem Schiebeelement gelagert ist.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:

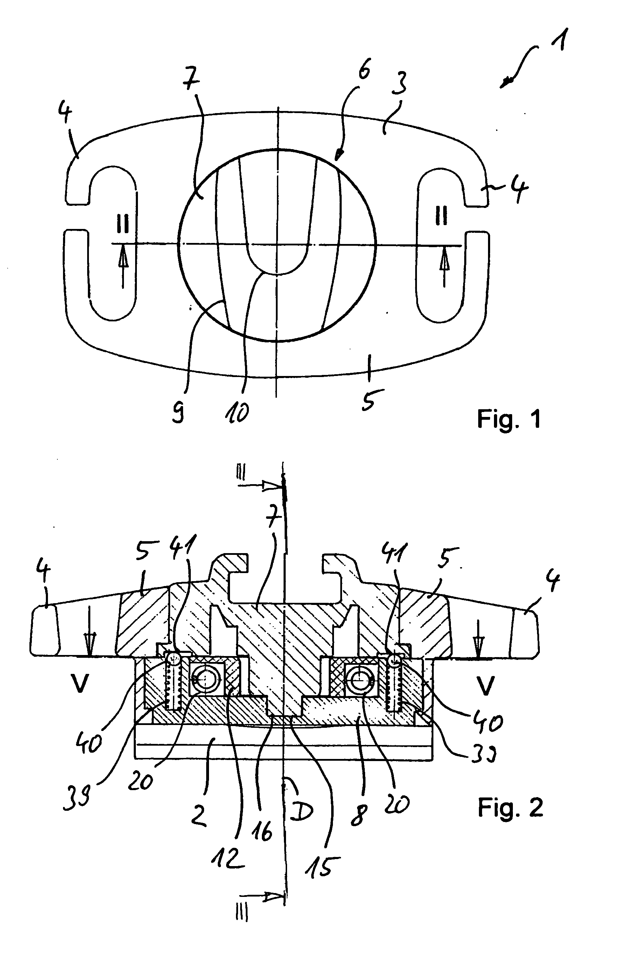

- Figur 1: eine Draufsicht auf eine erfindungsgemäße Halte- vorrichtung,
- Figur 2: einen Längsschnitt durch die Haltevorrichtung entlang der Schnittlinie II-II in Figur 1,
- Figur 3: eine Seitenansicht der Haltevorrichtung mit ei- nem Teilschnitt durch ein Klemmelement der Hal- tevorrichtung, das sich zur Bildung einer Ver- schiebestellung eines Haltekörpers der Haltevor- richtung in einer Außenstellung befindet,
- Figur 4: eine teilweise Seitenansicht gemäß Figur 3, bei der sich das Klemmelement in einer Innenposition zur Bildung der Klemmstellung des Haltekörpers befindet,
- Figur 5: einen Schnitt entlang der Linie V-V in Figur 2, wobei sich der Haltekörper in einer Verschiebe- stellung befindet,
- Figur 6: einen Schnitt entlang der Linie V-V in Figur 2, wobei sich der Haltekörper in einer Klemmstel- lung befindet,
- Figur 7: eine perspektivische Vorderansicht eines winkel- förmigen Einsetzteiles für das Klemmelement,
- Figur 8: eine perspektivische Seitenansicht des winkel- förmigen Einsetzteils und

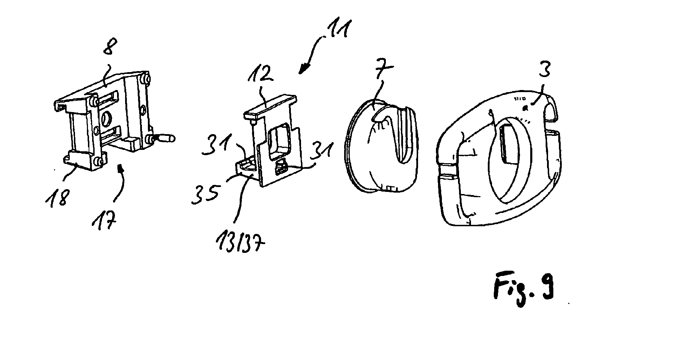

- Figur 9: eine Explosionsdarstellung der wesentlichen Tei- le der erfindungsgemäßen Haltevorrichtung.

Eine erfindungsgemäße Haltevorrichtung 1 dient vorzugsweise als Adapter zur Befestigung von Gepäckstangen, Netzen, Taschen und dergleichen an einer Halteschiene 2. Die Halteschiene 2 ist vorzugsweise in dem Kofferraum an einer aufrechten Innenwand befestigt. Beispielsweise kann sich an die Haltevorrichtung 1 eine Gepäckstange anschließen, die sich zwischen zwei gegenüberliegenden Halteschienen 2 in dem Kofferraum quer zur Längsachse des Fahrzeugs erstreckt.

Die Haltevorrichtung 1 weist zum einen einen Haltekörper 3 auf, der an gegenüberliegenden Stirnseiten jeweils Haltearme 4 aufweist, die derart geformt sind, dass beispielsweise Bänder oder dergleichen an dem Haltekörper 3 eingehängt werden können. Die Haltearme 4 sind einstückig mit einem Mitteil 5 des Haltekörpers 3 verbunden, das tellerförmig mit einer Öffnung 6 zur Aufnahme eines Drehelementes 7 ausgebildet ist.

Das Drehelement 7 ist als ein Drehknopf ausgebildet, der um eine senkrecht zur Erstreckung der Halteschiene 2 verlaufende Drehachse D verschwenkbar an einem unmittelbar auf der Halteschiene 2 aufliegenden Schiebeelement 8 gelagert ist. Das Drehelement 7 weist ein Griffteil 9 auf zum manuellen Erfassen des Drehelementes 7 und Verdrehen desselben um 90° zwischen einer Verschiebestellung des Haltekörpers 3, in der das Schiebeelement 8 und somit der Haltekörper 3 entlang der Halteschiene 2 verschieblich angeordnet ist, und einer Klemmstellung, in der das Schiebeelement 8 bzw. der Haltekörper 3 klemmend an der Halteschiene 2 fixiert ist. Vorzugsweise weist das Griffteil 9 eine U-förmige Ausnehmung 10 auf, in die ein nicht dargestelltes Kupplungselement der Gepäckstange einsetzbar ist. Zwischen dem Schiebeelement 8 und dem Haltekörper 3 ist ein winkelförmiges Stellorgan 11 angeordnet, das zum einen aus einem Querschieber 12 und zum anderen aus einem Klemmelement 13 besteht. Der Querschieber 12 liegt in der Montagestellung flächig auf einer der Halteschiene 2 abgewandten Flachseite des Schiebeelementes 8 an, wobei eine Ausnehmung 14 des Querschiebers 12 den Durchgang eines Bolzens 15 des Drehelementes 7 in eine Bohrung 16 des Schiebeelementes 8 ermöglicht zur drehbaren Lagerung des Drehelementes 7 an dem Schiebeelement 8. Das Klemmelement 13 weist einen Rasthaken auf, der einstückig mit dem Querschieber 12 des Stellorgans 11 verbunden ist und der in einer Durchbrechung 17 einer ebenen Führungsfläche 18 des Schiebeelementes 8 gelagert ist. Der Rasthaken 13 befindet sich in der Montagestellung der Haltevorrichtung 1 auf einer zu einem Anlagehaken 19 des Schiebeelementes 8 gegenüberliegenden Seite desselben. In der Montagestellung hintergreifen sowohl der Anlagehaken 19 als auch der Rasthaken 13 die Halteschiene 2.

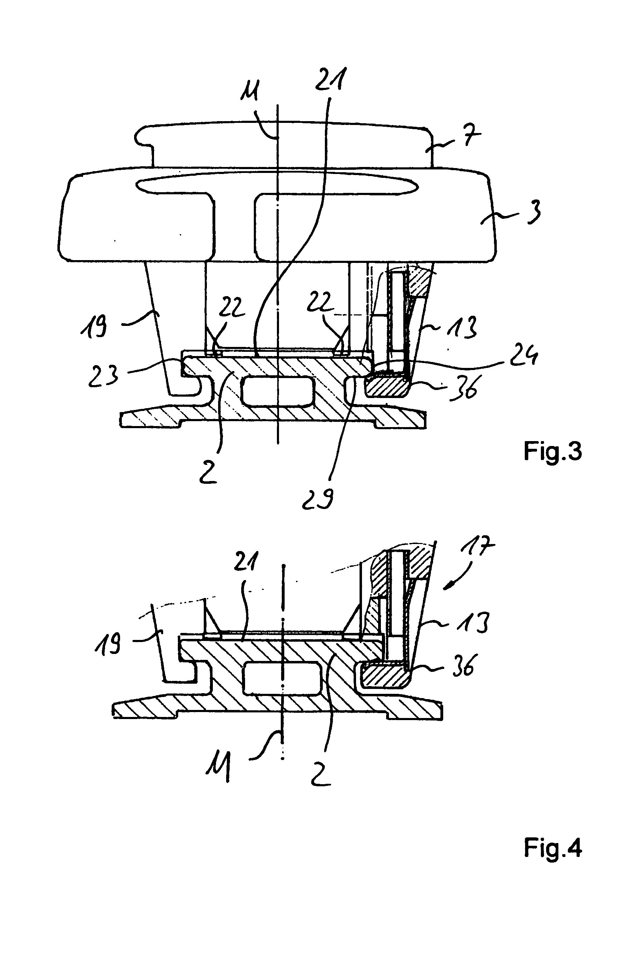

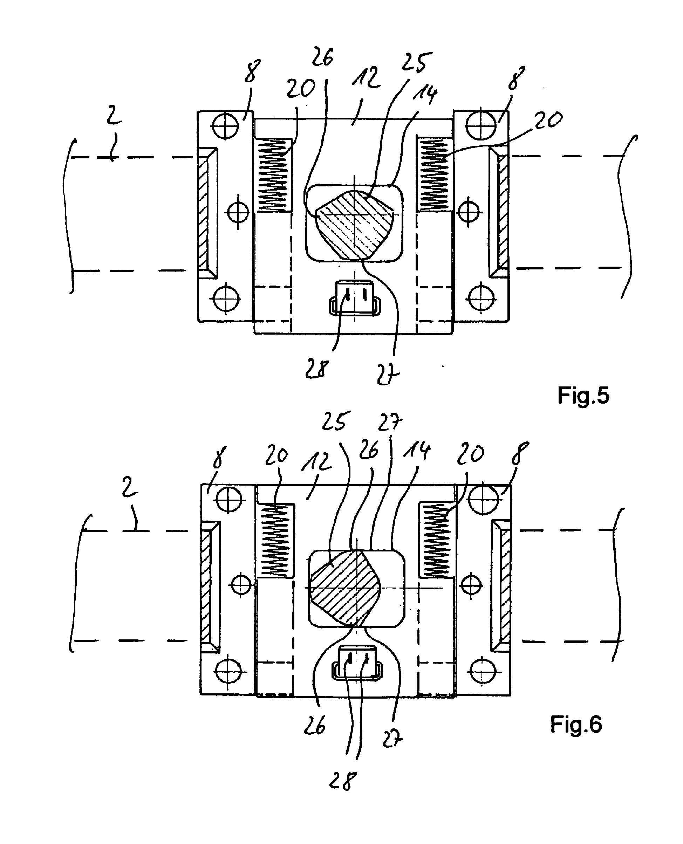

In der Montagestellung ist der Querschieber 12 mittels gegenüberliegender Druckfedern 20 gegenüber dem Drehknopf 7 in einer Ausgangsstellung gehalten. In dieser Ausgangsstellung befindet sich der Rasthaken 13 in einer Außenposition gemäß Figur 3 bzw. Figur 5, in der sich der Haltekörper 3 in einer Verschiebestellung befindet, so dass er zusammen mit dem Schiebeelement 8 entlang der Halteschiene 2 verschiebbar ist. Zu diesem Zweck weist das Schiebeelement 8 auf einer einer Vorderseite 21 der Halteschiene 2 zugewandten Seite gegenüberliegende Gleitkufen 22 auf, mittels derer das Schiebeelement 8 auf der Vorderseite 21 der Halteschiene 2 aufliegt und somit ein einfaches Verschieben desselben ermöglicht wird. Vorzugsweise sind die Gleitkufen 22 federnd ausgebildet.

Dadurch, dass das Stellorgan 11 mittels der Druckfedern 20 in eine Ausgangsstellung gehalten wird, kann die montierte Haltevorrichtung 1 unter Anlage des Anlagehakens 19 an einem ersten Längsrand 23 der Halteschiene 2 und nachfolgendem Verkippen in die Grundposition (Verschiebestellung) gemäß Figur 3 bzw. Figur 5 an der Halteschiene 2 verbracht werden, in der die Haltevorrichtung 1 entlang der Halteschiene 2 verschiebbar ist. In dieser Verschiebestellung hintergreift der Anlagehaken 19 des Schiebeelementes 8 den ersten Längsrand 23 der Halteschiene 2. Die Führungsfläche 18 des Schiebeelementes 8 liegt stumpf an einem zweiten Längsrand 24 der Halteschiene 2 an. Der sich in einer Außenstellung befindliche Rasthaken 13 stützt sich an dem zweiten Längsrand 24 der Halteschiene 2 in der Verschiebestellung ab, so dass ein gleitendes Verschieben des Schiebeelementes 8 entlang der Halteschiene 2 ermöglich ist.

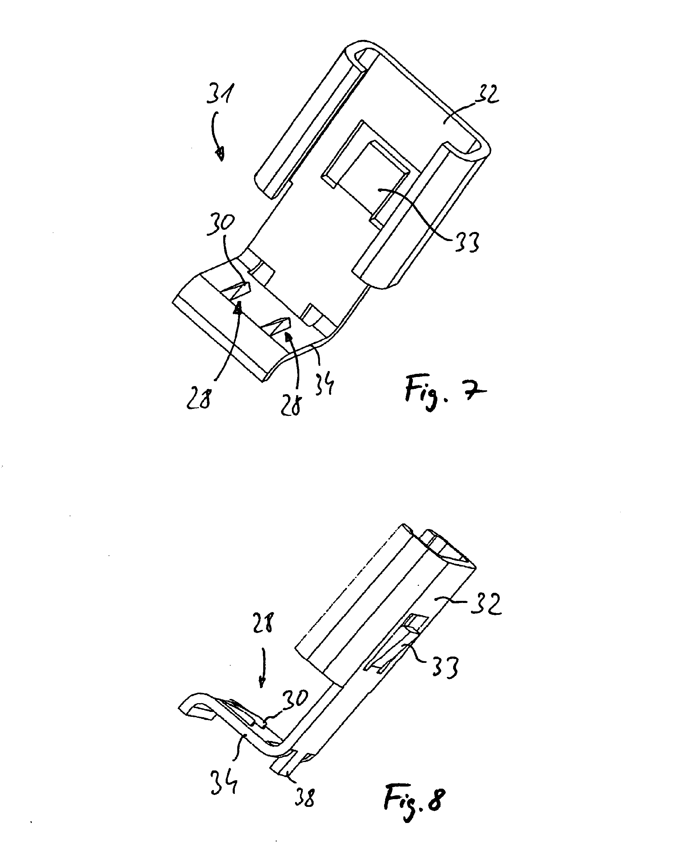

Zum Verbringen der Haltevorrichtung 1 aus der Verschiebestellung in die Klemmstellung wird das Drehelement 7 um 90° um die Drehachse D verschwenkt, wobei ein einstückig mit dem Drehelement 7 verbundener Exzenter 25 mit gegenüberliegenden Exzenterflächen 26 aus einer Drehstellung gemäß Figur 5, in der sie beabstandet zu einem Rand 27 der Ausnehmung 14 angeordnet sind, in eine zweite Drehstellung gemäß Figur 6 verdreht werden, in der sie gegen die Federkraft der Druckfedern 20 auf den Rand 27 der Ausnehmung 14 drücken und somit das Stellorgan 11 quer zu der Halteschiene 2 in eine Innenposition verschieben. Während des Verschiebens des Stellorgans 11 aus der Außenposition in die Innenposition presst der Rasthaken 13 mit einem Nocken 28 auf eine Rückseite 29 der Halteschiene 2, so dass mit Erreichen der Innenposition die Klemmstellung der Haltevorrichtung 1 erreicht ist. Der Nocken 28 weist ein spitz zulaufendes Eingreifende 30 auf, so dass der Rasthaken 13 in der Klemmstellung quasi formpressschlüssig mit der Halteschiene 2 verbunden ist. Hierbei gräbt sich der Nocken 28 mit seinem Eingreifende 30 in die Oberfläche der Halteschiene 2 ein. Wie besser aus den Figuren 7 und 8 zu ersehen ist, sind die beiden beabstandet zueinander angeordneten Nocken 28 des Rasthakens 13 in Richtung einer Längsmittelebene M der Halteschiene 2 verjüngend ausgebildet, so dass bei der Bewegung des Stellorgans 11 aus der Außenposition in die Innenposition die Anpresskraft nach und nach erhöht wird.

Der Nocken 28 ist Teil eines winkelförmigen Einsetzteils 31, das vorzugsweise aus einem Metallmaterial bzw. Stahlmaterial hergestellt ist. Das winkelförmige Einsetzteil 31 ist formschlüssig mit dem Rasthaken 13 verbunden, wobei ein Längsabschnitt 32 des Einsetzteils 31 eine Raste 33 aufweist, die in eine nicht dargestellte Ausnehmung des Rasthakens 13 eingreift. Die Nocken 28 sind auf einer Innenseite einer einstückig mit dem Längsabschnitt 32 verbundenen Fußabschnitt 34 des Einsetzteils 31 angeordnet. Der Fußabschnitt 34 des Einsetzteils 31 ist bündig zu benachbarten Endschenkeln 35 des Stellorgans 11 angeordnet. Die Endschenkel 35 bilden zusammen mit dem Fußabschnitt 34 eine Nase 36 des Rasthakens 13. Der Längsabschnitt 32 des Einsetzteils 31 ist in einer entsprechenden Ausnehmung des Stellorgans 11 angeordnet und bildet mit den benachbarten desselben einen Längssteg 37 des Rasthakens 13.

Der Längsabschnitt 32 des Einsetzteils 31 weist auf einer dem Fußabschnitt 34 zugewandten Seite einen Anschlag 38 auf, der die Nase 36 des Rasthakens 13 hintergreift und somit ein erleichtertes Lösen des Rasthakens 13 aus der Klemmstellung ermöglicht wird.

Befindet sich der Haltekörper 3 nach Zurückdrehen des Drehelementes 7 um 90° wieder in der Verschiebestellung, greifen mittels einer Feder 39 vorgespannte Kugeln 40 in eine Vertiefung 41 des Drehelementes 7. Die Federn 39 sind parallel zur Drehachse D orientiert angeordnet. Das Drehelement 7 weist weitere nicht dargestellte Vertiefungen an der Innenfläche desselben auf, so dass in der zweiten Drehstellung, nämlich in der Klemmstellung die Kugeln 40 in dieselben eingreifen und somit eine Rastung des Drehelementes 7 in den beiden Drehstellungen ermöglicht wird.

Im vorliegenden Ausführungsbeispiel ist die Rückseite 29 der Halteschiene 2 glatt ausgebildet, wobei die Nocken 28 sich in der Klemmstellung nach und nach in die Oberfläche derselben einpressen.

Nach einer nicht dargestellten alternativen Ausführungsform der Erfindung kann die Rückseite 29 auch mit einer in Längsrichtung der Halteschiene 2 verlaufenden Rändelung versehen sein, wobei sich die Nocken 28 in der Klemmstellung in entsprechende Schlitze der Rändelung einpressen. Hierdurch ist ebenfalls eine sichere Fixierung der Haltevorrichtung 1 in der Klemmstellung gewährleistet. Da sich die Rändelung an der Rückseite 29 der Halteschiene 2 befindet, ist sie von außen nicht sichtbar.

Nach einer nicht dargestellten alternativen Ausführungsform könnten die Nocken 28 auch derart angeordnet sein, dass sie auf eine die Rückseite 29 mit der Vorderseite 21 verbindende Schmalseite der Halteschiene 2 pressen.

Das Stellorgan 11 ist mit Ausnahme des Einsetzteils 31 - wie das Drehelement 7 sowie der Haltekörper 3 sowie das Schiebeelement 8 - aus einem Kunststoffmaterial hergestellt.

## Patentansprüche

1. Haltevorrichtung zur Befestigung von Gepäckstangen, Netzen, Taschen oder dergleichen an in einem Gepäckraum von Fahrzeugen montierten Halteschienen (2) mit einem Haltekörper (3), der in einer Klemmstellung an der Halteschiene (2) festlegbar ist und der in einer Verschiebestellung entlang der Halteschiene (2) verschiebbar lagerbar ist, mit einem beweglich gelagerten Klemmelement (13), das in der Klemmstellung den Haltekörper (2) an der Halteschiene (2) festgelegt werden kann und das in der Verschiebestellung verschiebbar an der Halteschiene (2) lagerbar ist, mit einem um eine senkrecht zur Erstreckung der Halteschiene (2) verlaufende Drehachse (D) verdrehbares Drehelement (7) zum Verbringen des Haltekörpers (2) von der Verschiebestellung in die Klemmstellung und vice versa, wobei sich das Drehelement (7) in der Verschiebestellung des Haltekörpers (2) in einer ersten Drehstellung und in der Klemmstellung des Haltekörpers in einer zweiten Drehstellung befindet, wobei das Drehelement (7) drehbar an dem Haltekörper (3) und/oder an einem teilweise die Halteschiene (2) umgreifenden Schiebeelement (8) gelagert ist, wobei das Klemmelement (13) quer zur Drehachse (D) linear beweglich angeordnet ist, wobei das Drehelement (7) bei montierter Haltevorrichtung über Stellmittel derart auf das Klemmelement (13) einwirkt, dass das Klemmelement (13) sich in einer Außenposition desselben an der Halteschiene (2) mit einer vorspringenden Nase (36) abstützt zur Bildung der Verschiebestellung und dass das Klemmelement (13) die Halteschiene (2) zur Bildung der Klemmstellung hintergreift, **dadurch gekennzeichnet, dass** das Klemmelement (13) in einer Innenposition desselben die Halteschiene (2) unter pressender Anlage eines quer zur Bewegungsrichtung des Klemmelementes (13) abragenden Nockens (28) der Nase (36) hintergreift zur Bildung der Klemmstellung und dass das Klemmelement (13) einen Rasthaken aufweist, der einstückig mit einem Querschieber (12) verbunden ist zur Bildung eines Stellorgans (11), wobei sich der Querschieber (12) zwischen dem Schiebeelement (8) und dem Haltekörper (3) erstreckt und wobei der Querschieber (12) eine Ausnehmung (14) aufweist, in der ein Exzenter (25) als Stellmittel gelagert ist.

2. Haltevorrichtung nach Anspruch 1, **dadurch gekennzeichnet, dass** der Nocken (28) auf einer einer Rückseite (29) der Halteschiene (2) zugewandten Seite der Nase (36) des Klemmelementes (13) angeordnet ist und dass der Nocken (28) ein spitz zulaufendes Eingreifende (30) aufweist.

3. Haltevorrichtung nach Anspruch 1 oder 2, **dadurch gekennzeichnet, dass** der Nocken (28) in Richtung einer Längsmittelebene (M) der Halteschiene (2) verjüngend ausgebildet ist, derart, dass beim Bewegen des Nockens (28) von der Außenposition in die Innenposition des Klemmelementes (13) sich die Anpresskraft der Nase (36) auf die Rückseite (29) der Halteschiene (2) erhöht.

4. Haltevorrichtung nach einem der Ansprüche 1 bis 3, **dadurch gekennzeichnet, dass** der Nocken (28) von einem winkelförmigen Einsetzteil (31) abragt, das formschlüssig in dem Klemmelement (13) integriert ist.

5. Haltevorrichtung nach einem der Ansprüche 1 bis 4, **dadurch gekennzeichnet, dass** das Klemmelement (13) als ein Rasthaken (13) ausgebildet ist mit einem Längssteg (37) und mit der sich endseitig an demselben in einem Winkel anschließenden Nase (36).

6. Haltevorrichtung nach einem der Ansprüche 1 bis 5, **dadurch gekennzeichnet, dass** der Exzenter (25) drehfest und/oder einstückig mit dem Drehelement (7) verbunden ist und dass der Exzenter (25) ein in Umfangsrichtung verlaufende Exzenterfläche (26) aufweist, die mit einem Rand (27) der Ausnehmung (14) des Querschiebers (12) derart zusammenwirkt, dass in Abhängigkeit von einer um 90° verdrehten Drehstellung des Drehelementes (7) der Querschieber (12) und das Klemmelement (13) in der Innenposition oder in der Außenposition angeordnet sind.

7. Haltevorrichtung nach einem der Ansprüche 1 bis 6, **dadurch gekennzeichnet, dass** der Querschieber (12) mittels einer Druckfeder (20) gegenüber dem Drehelement (7) in einer Ausgangsstellung gehalten ist.

8. Haltevorrichtung nach einem der Ansprüche 1 bis 7, **dadurch gekennzeichnet, dass** das Schiebeelement (8) auf einer eine Vorderseite (21) der Halteschiene (2) zuwendbaren Seite gegenüberliegende Gleitkufen (22) aufweist, mittels derer das Schiebeelement (8) auf der Vorderseite (21) der Halteschiene (2) aufliegen kann.

9. Haltevorrichtung nach Anspruch 4 **dadurch gekennzeichnet, dass** das winkelförmige Einsetzteil (31) federnd ausgebildet ist, wobei ein Längsabschnitt (32) desselben rastend mit Endschenkeln (35) des Klemmelementes (13) verbunden ist und wobei ein sich an den Längsabschnitt (32) des Einsetzteils (31) anschließender Fußabschnitt (34) den Nocken (28) aufweist.

10. Haltevorrichtung nach Anspruch 9, **dadurch gekennzeichnet, dass** der Längsabschnitt (32) des winkelförmigen Einsetzteils (31) auf einer dem Fußabschnitt (34) desselben zugewandten Seite einen Anschlag (38) aufweist, der die Nase (36) des Klemmelementes (13) hinterfasst.

11. Haltevorrichtung nach einem der Ansprüche 1 bis 10, **dadurch gekennzeichnet, dass** das Schiebeelement (8) auf einer ersten Seite einen Anlagehaken (19) und auf einer gegenüberliegenden zweiten Seite lediglich eine ebene Führungsfläche (18) aufweist, wobei in der Verschiebestellung und in der Klemmstellung der Anlagehaken (19) einen ersten Längsrand (23) der Halteschiene (2) hintergreift und die Führungsfläche (18) stumpf an einem zweiten Längsrand (24) der Halteschiene (2) anliegt.

12. Haltevorrichtung nach Anspruch 11, **dadurch gekennzeichnet, dass** die Führungsfläche (18) des Schiebeelementes (8) eine Durchbrechung (17) aufweist zur Aufnahme des Klemmelementes (13).

13. Haltevorrichtung nach Anspruch 4 **dadurch gekennzeichnet, dass** das winkelförmige Einsetzteil (31) aus einem Metallwerkstoff gebildet ist.

## Claims

1. Holding device for securing packing rods, nets, bags and such like on holding rails (2) mounted inside a vehicle trunk and provided with a holding body member (3) which is fixed to said holding rail (2) while in a clamped state and which can be shifted along said holding rail (2) while in a shifting state which device comprises a movable clamping element (13) that can secure said holding body member (3) to the holding rail (2) and that is shiftable along said rail (2) while in the shifting state, and a swivel element (7) that can be turned around a rotational axis extending perpendicular to the extension of the holding rail (2) to move the holding body member (3) from its shifting position to its clamped position and vice versa, wherein the swivel element (7) is in a first rotational position while in the shifting state of the holding body member (3) and in a second rotational position while in the clamped state thereof, wherein the swivel element (7) is rotatably mounted to the holding body member (3) and/or to a shifting element (8) that partly encompasses the holding rail (2), wherein a clamping element (13) is mounted to linearly move cross to a rotational axis (D), wherein the clamping element (7) acts on said clamping element (13) via adjusting means in such a way on assembly of the holding device that in an outward position said clamping element (13) is engaged with the holding rail (2) by a projecting nose (36) to establish the shifting state and that said clamping element (13) reaches behind said holding rail (2) to establish the clamped state, **characterized in that** in an inward position the clamping element (13) reaches behind the holding rail (2) in pressing contact by a cam (28) that is part of said nose (36) and that protrudes cross to the direction of movement of said clamping element (13) to establish the clamped state and that the clamping element (13) is provided with a latch hook integral with a cross-shifter (12) to form an adjusting member (11) wherein said cross-shifter (12) extends between the shifting element (8) and the holding body member (3) and wherein said cross-shifter (12) has a recess (14) for an adjusting means in the form of an eccentric (15) to engage into.

2. Holding device according to Claim 1, **characterized in that** the cam (28) is disposed on a side of the nose (36) of the clamping element (13) that is facing a rear face (29) of the holding rail (2) and that said cam (28) has a tapered engaging end (30).

3. Holding device according to Claim 1 or 2, **characterized in that** the cam (28) is tapered toward a longitudinal center plane (M) of the holding rail (2) such that the contact force applied to the rear face (29) of the holding rail (2) by the nose (36) gets increased when the cam (28) is moved from the outward position to the inward position of the clamping element (13).

4. Holding device according to any of the preceding Claims 1 to 3, **characterized in that** the cam (28) protrudes from an angular insert member (31) which is positively integrated into the clamping element (13).

5. Holding device according to any of the preceding Claims 1 to 4, **characterized in that** the clamping element (13) is in the form of a latch hook (31) having a longitudinal web (37) and a nose (36) adjoining the end thereof under an angle (36).

6. Holding device according to any of the preceding Claims 1 to 5, **characterized in that** the eccentric (25) is non-rotatably connected to and/or integral with the swivel element (7) and that said eccentric (25) has a circumferentially extending eccentric face (26) which is adapted to coact with a marginal edge (27) of the recess (14) of the cross-shifter (12) in such a way that dependent on a 90° turned position of the swivel element (7) the cross-shifter (12) and the clamping element (13) are either in an inward or an outward position.

7. Holding device according to any of the preceding Claims 1 to 6, **characterized in that** the cross-shifter (12) is retained in a home position relative to the swivel element (7) by a pressure spring (20).

8. Holding device according to any of the preceding Claims 1 to 7, **characterized in that** on a side opposing a front face (21) of the holding rail (2) the shifting element (8) has skid members (22) by means of which said shifting element (8) can be made to seat on the front face (21) of the holding rail (2).

9. Holding device according to Claim 4, **characterized in that** the angular insert member (31) is flexible and has a longitudinal section (32) which is latched to end legs (35) of the clamping element (13) and that a foot section (34) adjoining said longitudinal section (32) of insert member (31) is provided with said cam (28).

10. Holding device according to Claim 9, **characterized in that** the longitudinal section (32) of the angular insert member (31) has on a side facing the foot section (34) a stop member (38) which reaches behind the nose (36) of the clamping element (13).

11. Holding device according to any of the preceding Claims 1 to 10, **characterized in that** the shifting element (8) comprises on a first side a locator hook (19) and on an opposite side only a plane guide face (18) wherein while in the shifting and in the clamped state said locator hook (19) reaches behind a first longitudinal edge (23) of the holding rail (2) and said guide face (18) is abutting a second longitudinal edge (24) of the holding rail (2).

12. Holding device according to Claim 11, **characterized in that** said guide face (18) of the shifting element (8) has a breakthrough (17) to receive the clamping element (13).

13. Holding device according to Claim 4, **characterized in that** the angular insert member (31) is made of a metallic material.

## Revendications

1. Dispositif de fixation pour la fixation de barres porte-bagages, de filets, de sacs ou de pièces analogues, sur des rails de fixation (2), qui sont montés dans un compartiment à bagages de véhicules, avec un organe de fixation (3), qui peut être fixé, dans une position de blocage, sur le rail de fixation (2), et qui peut être monté, déplaçable le long du rail de fixation (2), avec un élément de serrage (13) mobile, qui, dans la position de blocage, peut fixer l'organe de fixation (3) sur le rail de fixation (2), et qui, dans la position de déplacement, peut être déplacé sur le rail de fixation (2), avec un élément rotatif (7), qui peut tourner autour d'un axe de rotation (D) perpendiculairement à la projection du rail de fixation (2), pour amener l'organe de fixation (3) de la position de déplacement dans la position de blocage et inversement, sachant que l'élément rotatif (7) se trouve dans une première position de rotation, quand l'organe de fixation (3) est dans la position de déplacement, et dans une deuxième position de rotation, quand l'organe de fixation (3) est dans la position de blocage, sachant que l'élément rotatif (7) est monté à rotation sur l'organe de fixation (3) et / ou sur un élément coulissant (8), qui enserre partiellement le rail de fixation (2), sachant que l'élément de blocage (13) est disposé, mobile linéairement, transversalement par rapport à l'axe de rotation (D), sachant que l'élément rotatif (7), lorsque le dispositif de fixation est à l'état monté, agit sur l'élément de blocage (13), par l'intermédiaire de moyens d'ajustage, de sorte que ledit élément de serrage (13), dans une position extérieure de celui.ci, prend appui sur le rail de fixation (2) avec un nez en saillie (36), pour la réalisation de la position de déplacement, et que ledit élément de serrage (13) s'accroche derrière le rail de fixation (2) pour la réalisation de la position de blocage, **caractérisé en ce que** l'élément de blocage (13), dans une position intérieure de celui-ci, s'agrippe derrière le rail de fixation (2), sous l'action d'une came (28) du nez (36), qui fait saillie perpendiculairement à la direction de déplacement de l'élément de blocage (13), pour la réalisation de la position de blocage, et que l'élément de blocage (13) présente un crochet d'enclenchement, qui est relié d'une pièce à un coulisseau transversal (12) pour former un organe d'ajustage (11), sachant que ledit coulisseau transversal (12) s'étend entre l'élément coulissant (8) et l'organe de fixation (3), et que le coulisseau transversal (12) présente un évidement (14), dans lequel un excentrique (25) est agencé en tant qu'organe d'ajustage.

2. Dispositif de fixation selon la revendication 1, **caractérisé en ce que** la came (28) est disposée sur la face du nez (36) de l'élément de blocage (13), qui est orientée vers le rail de fixation (2), et que ladite came (28) présente une extrémité de prise (30) pointue.

3. Dispositif de fixation selon revendication 1 ou 2, **caractérisé en ce que** la came (28) s'amincit en direction d'un plan médian longitudinal (M) du rail de fixation (2) de sorte que, lors d'un déplacement de la came (28) de la position extérieure à la position intérieure de l'élément de blocage (13), la force de pression, exercée par le nez (36) sur la face arrière (29) du rail de fixation (2) augmente.

4. Dispositif de fixation selon l'une des revendications 1 à 3, **caractérisé en ce que** la came (28) fait saillie au-delà d'un insert (31) en forme d'angle, qui est intégré dans l'élément de blocage (13) par emboîtement géométrique.

5. Dispositif de fixation selon l'une des revendications 1 à 4, **caractérisé en ce que** l'élément de blocage (13) est réalisé sous la forme d'un crochet d'arrêt (13), avec une patte longitudinale (37) et avec le nez (36), qui se raccorde à l'extrémité de celui-ci en formant un angle.

6. Dispositif de fixation selon l'une des revendications 1 à 5, **caractérisé en ce que** l'excentrique (25) est relié, solidaire en rotation et / ou d'une pièce, à l'élément rotatif (7), et que ledit excentrique (25) présente une surface d'excentrique (26), qui, s'étendant dans la direction périphérique, coopère avec un bord (27) de l'évidement (14) du coulisseau transversal (12) de sorte que ledit coulisseau transversal (12) et l'élément de blocage (13) soient disposés dans la position intérieure ou dans la position extérieure, en fonction d'un positionnement en rotation de 90 ° de l'élément rotatif (7) du coulisseau transversal (12).

7. Dispositif de fixation selon l'une des revendications 1 à 6, **caractérisé en ce que** le coulisseau transversal (12) est maintenu, par rapport à l'élément rotatif (7), dans une position de départ au moyen d'un ressort de pression (20).

8. Dispositif de fixation selon l'une des revendications 1 à 7, **caractérisé en ce que** le l'élément coulissant (8) présente, sur une face pouvant être orientée vers la face antérieure (21) du rail de fixation (2), des patins opposés (22), au moyen desquels l'élément coulissant (8) peut prendre appui sur la face antérieure (21) du rail de fixation (2).

9. Dispositif de fixation selon la revendication 4, **caractérisé en ce que** l'insert de forme angulaire (31) est de conception élastique, sachant qu'une section longitudinale (32) de celui-ci est reliée par enclenchement aux ailes d'extrémité (35) de l'élément de blocage (13), et sachant qu'un pied (34), qui se raccorde à la section longitudinale (32) de l'insert de forme angulaire (31), est doté de la came (28).

10. Dispositif de fixation selon la revendication 9, **caractérisé en ce que** la zone longitudinale (32) de l'insert de forme angulaire (31) présente, sur une face orientée vers le pied (34) de celui-ci, une butée (38), qui enserre l'arrière du nez (36) de l'élément de blocage (13).

11. Dispositif de fixation selon l'une des revendications 1 à 10, **caractérisé en ce que** l'élément coulissant (8) présente, sur une première face, un crochet de positionnement (19) et, sur une deuxième face opposée, seulement une surface de guidage plane (18), sachant que, dans la position de déplacement et dans la position de blocage, ledit crochet de positionnement (19) s'accroche derrière un premier bord longitudinal (23) du rail de fixation (2) et que la surface de guidage (18) porte bord à bord contre un deuxième bord longitudinal (24) dudit rail de fixation (2).

12. Dispositif de fixation selon la revendication 11, **caractérisé en ce que** la surface de guidage (18) de l'élément coulissant (8) présente un passage (17), qui est destiné à recevoir l'élément de blocage (13).

13. Dispositif de fixation selon la revendication 4, **caractérisé en ce que** l'insert de forme angulaire (31) consiste en un matériau métallique.
